# EUROPÄISCHE PATENTSCHRIFT

(11) **EP 3 931 054 B1**
(45) Veröffentlichungstag und Bekanntmachung des Hinweises auf die Patenterteilung: **08.11.2023**
(21) Anmeldenummer: 20704199.7
(22) Anmeldetag: 29.01.2020
(51) Int. Cl.: B60T 17/02, B60T 17/00

(54) **LUFTVERSORGUNGSANLAGE UND VERFAHREN ZUM STEUERN UND/ODER ÜBERWACHEN EINER LUFTVERSORGUNGSANLAGE**
AIR SUPPLY SYSTEM AND METHOD FOR CONTROLLING AND/OR MONITORING AN AIR SUPPLY SYSTEM
SYSTÈME D'ALIMENTATION EN AIR ET PROCÉDÉ DE COMMANDE ET/OU DE SURVEILLANCE D'UN SYSTÈME D'ALIMENTATION EN AIR

(30) Priorität: 25.02.2019 DE 102019104760
(43) Veröffentlichungstag der Anmeldung: 05.01.2022
(73) Patentinhaber: KNORR-BREMSE Systeme für Schienenfahrzeuge GmbH, 80809 München (DE)
(72) Erfinder: HERDEN, Marc-Oliver, 81377 München (DE); KIPP, Thomas, 81547 München (DE); MERKEL, Thomas, 50354 Hürth (DE); SCHMID, Martin, 80636 München (DE)
(86) Internationale Anmeldenummer: PCT/EP2020/052151
(87) Internationale Veröffentlichungsnummer: WO 2020/173649

(56) Entgegenhaltungen:
- DE-A1- 19 835 638
- DE-A1-102013 101 502

## Beschreibung

Die vorliegende Erfindung betrifft eine Luftversorgungsanlage für ein Schienenfahrzeug. Außerdem betrifft die vorliegende Erfindung ein Verfahren zum Steuern und/oder Überwachen einer Luftversorgungsanlage.

Das Einsatzgebiet der Erfindung erstreckt sich vornehmlich auf Schienenfahrzeuge. Es ist aber auch denkbar, die Luftversorgungsanlage in Nutzfahrzeugen einzusetzen, um dort einen pneumatischen Kreislauf zu unterhalten. Im Allgemeinen dienen Luftversorgungsanlagen in Schienenfahrzeugen dazu, Druckluft in definierter Quantität und Qualität beispielsweise zum Betätigen der Bremsen, Öffnen und Schließen der Türen sowie für die Versorgung der Luftfederung bereitzustellen. Luftversorgungsanlagen umfassen mehrere Komponenten, beispielsweise einen Kompressor zum Verdichten/Komprimieren von Luft, eine Luftaufbereitungseinrichtung zum Reinigen der Luft bzw. zum Entfernen von Wasser-, Schmutz- und/oder Ölbestandteilen aus der Luft, welche den Betrieb der pneumatischen Verbraucher beeinträchtigen können, und mehrere Ventile zum Steuern der Luftströmung.

Es ist bekannt, die Stromversorgung der Komponenten, die als Verbraucher bezeichnet werden können, der Luftversorgungsanlage mittels eines Hilfsbetriebeumrichters zu realisieren. Der Hilfsbetriebeumrichter sorgt dabei für die Anpassung der an der Stromversorgung des Schienenfahrzeugs anliegenden Spannung an die notwendige Eingangsspannung des jeweiligen Verbrauchers. An Luftversorgungsanlagen in Schienenfahrzeugen werden vielfältige, teilweise gegensätzliche Anforderungen gestellt, die je nach Betriebszustand oder Situation des Schienenfahrzeug bzw. der Luftversorgungsanlage variieren können. Am Beispiel des Kompressors bedeutet dies zum Beispiel, dass gleichzeitig hohe Lieferleistungen, ausreichende Einschaltdauern, geringe Schallemissionen, ein niedriger Energieverbrauch, ein kleiner Bauraum sowie niedrige Kosten gefordert werden. Im Stand der Technik ist es nicht bekannt, die Verbraucher der Luftversorgungsanlage bedarfsgerecht, d. h. in Abhängigkeit des jeweiligen Betriebszustands, zu steuern.

EP 2 956 341 B1 lehrt einen elektronischen Umrichter, der einem Motor eines Kompressors zur Erzeugung von Druckluft zur bedarfsabhängigen Kompressorsteuerung zugeordnet ist. Zur Überwachung und Steuerung des Kompressors werden Sensoren zur Generierung von elektrischen Signalen eingesetzt. Eine Auswertung der durch die Sensoren generierten elektrischen Signale und eine Ableitung von Steuerbefehlen erfolgt mittels einer in einem zentralen Steuergerät hinterlegten Software. Das System gemäß EP 2 956 341 B1 erfordert demnach zusätzliche Elektronik-Schnittstellen sowie -Komponenten zur Verarbeitung der elektronischen Signale. Des Weiteren beschränkt sich das System auf den Einsatz zur Kompressorsteuerung. Weitere Komponenten/Verbraucher können nicht gesteuert werden.

Eine Vorrichtung und ein Verfahren zum Überwachen des Betriebs der Luftversorgungsanlage geht beispielsweise aus EP 3 093 206 B1 hervor. Die Vorrichtung umfasst Sensorik zum Messen von Betriebsdaten der Luftversorgungsanlage sowie eine Schnittstelle zum Empfangen der Messdaten, eine Auswerteeinrichtung, um die empfangenen Messdaten auszuwerten, eine Kommunikationsschnittstelle sowie eine stationäre Auswerteeinheit, um die ausgewerteten Informationen stationär weiter zu verarbeiten. Über eine zusätzliche Datenschnittstelle zu einer Fahrzeugsteuerung des Schienenfahrzeugs können fahrzeugspezifische Daten ausgelesen und über die Kommunikationsschnittstelle bereitgestellt werden. Die Stromversorgung zum Ein- bzw. Ausschalten der Luftversorgungsanlagenkomponenten erfolgt über einen separaten Elektronikkreislauf mit einer zusätzlichen zentralen Einheit und zusätzlichen Stromversorgungsleitungen. Durch die Vorrichtung gemäß EP 3 093 206 B1 wurde die Komplexität der Elektronik sowie die Anzahl der notwendigen Elektronik-Komponenten sowie -Schnittstellen deutlich erhöht, wodurch die Vorrichtung fehleranfällig ist. Weitere Beispiele von Vorrichtungen/Verfahren sind aus den DE 198 35 638 A1 und DE 10 2013 101 502 A1 bekannt.

Es ist Aufgabe der vorliegenden Erfindung, die Nachteile aus dem bekannten Stand der Technik zu verbessern, insbesondere eine effiziente Luftversorgungsanlage bereitzustellen, dessen Betrieb vorzugsweise betriebszustandsabhängig gesteuert, insbesondere geregelt, und/oder überwacht werden kann.

Die Aufgabe wird durch den Gegenstand der Ansprüche 1 bzw. 16 gelöst.

Danach ist eine Luftversorgungsanlage für ein Schienenfahrzeug bereitgestellt. Die erfindungsgemäße Luftversorgungsanlage dient im Allgemeinen dazu, Druckluft in definierter Quantität und Qualität beispielsweise zum Betätigen der Bremsen, Öffnen und Schließen der Türen sowie für die Versorgung der Luftfederung bereitzustellen. Die Luftversorgungsanlage umfasst eine Gruppe von mehreren elektrischen Verbrauchern, die jeweils unterschiedliche Funktionen der Luftversorgungsanlage insbesondere entlang einer Strömung der Druckluft übernehmen. Beispielsweise umfasst die Luftversorgungsanlage einen Kompressor vorzugsweise zum Verdichten/Komprimieren von Luft, eine Luftaufbereitungseinrichtung zum Reinigen der Luft bzw. zum Entfernen von Wasser-, Schmutz- und/oder Ölbestandteilen aus der Luft, welche den Betrieb der elektrischen, pneumatischen Verbraucher beeinträchtigen können, ein oder mehrere Ventile zum Steuern der Luftströmung und/oder einen Lufttrockner zum Trocknen und/oder Entfeuchten der Luft. Die Luftversorgungsanlage kann derart aufgebaut sein, dass die Gruppe von mehreren elektrischen Verbrauchern entlang der Strömung der Luft in Reihe geschaltet sind. Es sei klar, dass abschnittsweise entlang der Luftströmung auch wenigstens zwei der Gruppe von mehreren elektrischen Verbrauchern parallel zueinander geschaltet sein können.

Die Luftversorgungsanlage umfasst außerdem einen an eine Stromversorgung des Schienenfahrzeugs, insbesondere eines Hilfsbetriebeumrichters des Schienenfahrzeugs gekoppelten Umrichter. Der Umrichter kann beispielsweise als Frequenz- und/oder Wechselstrom-Umrichter ausgebildet und dazu eingerichtet sein, aus einer Wechselspannung eine in der Frequenz und/oder Amplitude unterschiedliche Wechselspannung zu generieren. Der Umrichter kann beispielsweise eine im Stand der Technik bekannte Topologie besitzen und/oder bekanntermaßen realisiert sein, um die Wechselspannung in Amplitude und/oder Frequenz umzurichten. Der Umrichter ist dazu vorgesehen, die von der Stromversorgung bereitgestellte Spannung und/oder Frequenz an eine Betriebsspannung und/oder Betriebsfrequenz wenigstens eines elektrischen Verbrauchers, mit der der elektrische Verbraucher zu betreiben ist, der Gruppe von mehreren elektrischen Verbrauchern anzupassen. Gemäß einer beispielhaften Ausführung passt der Umrichter die von der Stromversorgung bereitgestellte Spannung und/oder Frequenz an die Betriebsspannung und/oder Betriebsfrequenz wenigstens, insbesondere ausschließlich, des Kompressors an. Der Umrichter kann beispielsweise den weiteren elektrischen Verbrauchern der Gruppe von mehreren elektrischen Verbrauchern die von der Stromversorgung bereitgestellte Spannung und/oder Frequenz weiterleiten, wie Durchschalten, wobei beispielsweise ein durch elektrischen Strom betriebener, insbesondere elektromagnetischer, Schalter, wie ein Relais, zum Aktivieren und Deaktivieren des entsprechenden elektrischen Verbrauchers oder ein Magnetventil zum flexiblen Steuern des Betriebs des entsprechenden elektrischen Verbrauchers zwischengeschaltet ist. Beispielsweise kann der Umrichter wenigstens einen Leistungsausgang aufweisen, mittels dem der Umrichter mit dem wenigstens einen elektrischen Verbraucher verbunden ist, um diesen mit der entsprechenden Betriebsspannung und/oder Betriebsfrequenz zu betreiben. Des Weiteren kann der Umrichter eine Vielzahl von Steuerausgängen besitzen, wobei der Umrichter mit je einem der Gruppe von mehreren elektrischen Verbrauchern über je einen Steuerausgang gekoppelt ist, um den jeweiligen elektrischen Verbraucher zu betreiben.

Gemäß einem ersten Aspekt der vorliegenden Erfindung ist der Umrichter wenigstens zwei, vorzugsweise sämtlichen, der Gruppe von mehreren Verbrauchern derart zugeordnet, dass der Umrichter den Betrieb der wenigstens zwei der Gruppe von mehreren Verbrauchern steuern, insbesondere regeln, und/oder überwachen kann. Dadurch, dass der Umrichter steuerungs- und/oder überwachungstechnisch wenigstens zwei, vorzugsweise sämtlichen, der Gruppe von elektrischen Verbrauchern zugeordnet ist, können zusätzliche elektronische Steuerungen und Elektronikschnittstellen, welche im Stand der Technik zum Verknüpfen der verschiedenen Elektronikkreisläufe nötig waren, reduziert bzw. eingespart werden. Dies wird dadurch verstärkt, dass der Umrichter eine Funktionsunion zur Steuerung, vorzugsweise Regelung, und/oder Überwachung bildet, so dass auch für die Überwachung, Wartung, Diagnose des Betriebs des Umrichters bzw. der Luftversorgungsanlage, insbesondere der wenigstens zwei, vorzugsweise sämtlichen, der Gruppe von mehreren elektrischen Verbrauchern, der Umrichter als zentrale Elektronik dient. Als Betrieb eines elektrischen Verbrauchers ist das Einschalten und Ausschalten bzw. der Einschalt- und Ausschaltzustand oder ein Betriebsmodus des elektrischen Verbrauchers, in dem dieser betreibbar ist und der variiert werden kann, zu verstehen, wobei als Betriebsmodus beispielsweise ein Notlaufbetrieb, ein Volllastbetrieb, ein Teillastbetrieb und sämtliche Zwischenbetriebsstufen zu verstehen sind, die mittels der Umrichters eingestellt werden können, um einen optimierten Betrieb der Luftversorgungsanlage in Bezug auf einen Betriebspunkt, wie Schallemission, Kompressortemperatur, Verbrauch von Regenerationsluft im Lufttrockner, Kompressorverschleiß oder Öl-Emulsifikation, zu steuern. Der Umrichter bildet demnach eine zentrale Intelligenz für die Luftversorgungsanlagc, die es erlaubt auf den Betrieb von wenigstens zwei, vorzugsweise sämtlichen, der Gruppe von mehreren Verbrauchern Einfluss zu nehmen, um den Betrieb der Luftversorgungsanlage zu optimieren und/oder den Betrieb bzw. den Betriebszustand der wenigstens zwei, insbesondere sämtliche, der Gruppe von mehreren elektrischen Verbrauchern zu überwachen, vorzugsweise diagnostizieren. Der Umrichter kann außerdem derart ausgelegt und/oder den wenigstens zwei der Gruppe von elektrischen Verbrauchern zugeordnet sein, dass er den Betrieb der wenigstens zwei der Gruppe von mehreren elektrischen Verbrauchern gezielt entlang einer Regelstrecke, die insbesondere durch die Luftströmung festgelegt ist, zu beeinflussen, um einen gewünschten, insbesondere vordefinierten und/oder einer Regelvorgabe aus einer übergeordneten Elektronik entsprechenden, Betrieb der wenigstens zwei elektrischen Verbraucher und/oder der Luftversorgungsanlage einzustellen.

In einer beispielhaften Ausführung der vorliegenden Erfindung weist der Umrichter eine Elektronik auf, die dazu eingerichtet ist, die von der Stromversorgung bereitgestellte Spannung und/oder Frequenz an die Betriebsspannung und/oder Betriebsfrequenz des wenigstens einen elektrischen Verbrauchers umzurichten. Die Elektronik kann dazu eingerichtet sein, elektrische Signale informationsgemäß zu erzeugen, elektrische Energie zu verwalten und/oder die Elektronik kann auf einer Platine aufgebaut sein, insbesondere um eine elektronische Anwendung zu realisieren. Alternativ oder zusätzlich kann der Umrichter derart signalübertragungsgemäß mit den wenigstens zwei der Gruppe von mehreren elektrischen Verbrauchern verbunden sein, dass die Elektronik deren Betrieb steuern kann. Es kann vorgesehen sein, dass die Elektronik den Betrieb der wenigstens zwei der Gruppe von mehreren elektrischen Verbrauchern anhand von in der Elektronik hinterlegten Steueralgorithmen steuert. Alternativ oder zusätzlich kann die Umrichterelektronik von einer übergeordneten Elektronik, wie eine Fahrzeugsteuerung oder eine Bremssteuerung, Steuersignale empfangen, anhand derer die wenigstens zwei der Gruppe von elektrischen Verbrauchern zu steuern sind. Der Umrichter kann beispielsweise mehrere Betriebsmodi aufweisen, anhand der die wenigstens zwei der Gruppe von elektrischen Verbrauchern zu steuern sind. Beispielsweise kann der Umrichter ein vorzugsweise digitales 3-Bit-Steuersignal von der übergeordneten Elektronik erhalten, welches den entsprechenden Betriebsmodus des Umrichters festlegt. Der Umrichter kann dazu eingerichtet sein, entsprechend des von der übergeordneten Elektronik festgelegten Betriebsmodus die wenigstens zwei der Gruppe von elektrischen Verbrauchern zu steuern. Beispielsweise wird zwischen einem Standardbetriebsmodus und einem Hilfsbetriebsmodus unterschieden, welche sich durch eine unterschiedliche Eingangsspannung und/oder Eingangsfrequenz unterscheiden. Gemäß einer Weiterbildung betreibt der Umrichter einen Kompressor eines Motors der Luftversorgungsanlage entsprechend des Betriebsmodus, beispielsweise in einem Volllastbetrieb, einem Teillastbetrieb oder einem Hilfsbetrieb. Der Umrichter kann ferner dazu eingerichtet sein, anhand der jeweiligen Drehzahl des Kompressors den Betrieb wenigstens eines weiteren, vorzugsweise sämtlichen, der Gruppe von elektrischen Verbrauchern der Luftversorgungsanlage zu steuern. Gemäß einer beispielhaften Weiterbildung kann der Umrichter derart signalübertragungsgemäß mit den wenigstens zwei der Gruppe von mehreren Verbrauchern verbunden sein, dass die Elektronik anhand von in der Elektronik hinterlegten Regelalgorithmen und/oder anhand von einer übergeordneten Elektronik, wie eine Fahrzeugsteuerung oder eine Bremssteuerung, empfangenen Regelsignalen den Betrieb der wenigstens zwei der Gruppe von mehreren elektrischen Verbrauchern regeln kann. Im Gegensatz zur Steuerung erfolgt bei der Regelung ein Erfassen einer zu beeinflussenden Größe, der Regelgröße, in einer Regelstrecke, die insbesondere durch die Luftströmung festgelegt ist, und ein vorzugsweise kontinuierliches Vergleichen und/oder Anpassen der Regelgröße an einen gewünschten Wert, vorzugsweise Sollwert. Gemäß einer weiteren beispielhaften Ausführung der vorliegenden Erfindung ist die Elektronik derart signalübertragungsgemäß mit den wenigstens zwei der Gruppe von mehreren elektronischen Verbrauchern verbunden, dass die Elektronik anhand von in der Elektronik hinterlegten Auswertealgorithmen den Betrieb der wenigstens zwei der Gruppe von mehreren elektrischen Verbrauchern überwachen kann, vorzugsweise um Aussagen über deren Betrieb treffen zu können, gegebenenfalls Wartungsmaßnahmen einleiten zu können und/oder den Betrieb des jeweiligen elektrischen Verbrauchers der Gruppe von mehreren elektrischen Verbrauchern anzupassen.

In einer beispielhaften Ausführung der erfindungsgemäßen Luftversorgungsanlage ist wenigstens ein Sensor zum Erfassen einer luftspezifischen Messgröße und/oder einer verbraucherspezifischen Messgröße und/oder eines Betriebsparameters des Umrichters signalübertragungsgemäß mit dem Umrichter verbunden. Eine luftspezifische Messgröße kann beispielsweise die Temperatur, der Druck, die Luftfeuchtigkeit oder dergleichen sein. Eine verbraucherspezifische Messgröße kann beispielsweise die Anzahl der Betriebsstunden, ein Temperaturwert, ein Verschleißwert, eine Eingangs- oder Ausgangsleistung sein. Es sei klar, dass der Sensor die angegebenen Messgrößen nicht direkt messen muss, sondern es beispielsweise vorgesehen sein kann, dass der Umrichter, insbesondere die Umrichterelektronik, indirekt die jeweilige Messgröße bestimmt, insbesondere berechnet, vorzugsweise anhand von einer weiteren Messgröße berechnet. Beispielsweise kann der Umrichter, insbesondere die Umrichterelektronik, dazu eingerichtet sein, einen Druckgradient am Kompressor der Luftversorgungsanlage zu erfassen und/oder zu überwachen. Der Umrichter ist ferner dazu eingerichtet, anhand des Verlaufs des Druckgradienten einen Verschleißgrad des Kompressors zu bestimmen. Beispielsweise nimmt der Verschleißgrad des Kompressors zu, wenn der Druckgradient zunehmend flacher wird. Des Weiteren kann der Sensor dazu eingerichtet sein, eine Öltemperatur einer Kompressorschmierung zu erfassen. Beispielsweise kann die Umrichterspannung oder die Temperatur als Betriebsparameter gekennzeichnet sein. Gemäß einer Weiterbildung ist der wenigstens eine Sensor derart angeordnet und/oder wenigstens einem der Gruppe von mehreren Verbrauchern zugeordnet, dass der Sensor die luftspezifische Messgröße und/oder die verbraucherspezifische Messgröße erfassen kann. Als beispielhafte Sensoren können Drucksensoren, Temperatursensoren, Differenzdrucksensoren und/oder Temperaturdifferenzsensoren eingesetzt werden. Der Umrichter, vorzugsweise dessen Elektronik, kann dazu eingerichtet sein, anhand der erfassten Messgröße/Messgrößen den Betrieb der wenigstens zwei der Gruppe von elektrischen Verbrauchern zu steuern, insbesondere zu regeln, und/oder zu überwachen.

Gemäß einer beispielhaften Weiterbildung der erfindungsgemäßen Luftversorgungsanlage ist der wenigstens eine Sensor dazu ausgebildet, einen Druckwert eines Kompressors, einen Druckwert eines stromaufwärtigen Eingangsfilters des Kompressors, einen Druckwert eines Lufttrockners, eine Temperatur des Lufttrockners oder des Kompressors und/oder einen Verschmutzungsgrad der Luft zu messen. Als Druckwert kann beispielsweise der stromaufwärtige Eingangsdruck und/oder der stromabwärtige Ausgangsdruck des jeweiligen elektrischen bzw. pneumatischen Verbrauchers sowie ein Differenzdruckwert gemessen werden. Bei dem Lufttrockner kann der Sensor dazu eingerichtet sein, einen Behälterdruck zu messen. Beispielsweise ist der Lufttrockner als Absorptions-Regenerations-Trockner mit zwei Trocknerbehältern ausgebildet. Diese sind derart eingerichtet, dass ein Luftbehälter einen Trocknungsprozess der darin angeordneten Luft ausführt, während der andere Luftbehälter einen Regenerationszyklus durchführt, bevor dieser wieder zum Lufttrocknen verwendet werden kann. Sobald der Regenerationszyklus beendet ist, wird beispielsweise mittels eines Ventils zwischen den beiden Luftbehältern umgeschaltet, so dass der zuvor sich im Trocknungsprozess befindende Luftbehälter regeneriert wird und der zuvor sich regenerierende Luftbehälter zur Lufttrocknung eingesetzt wird. Des Weiteren kann es vorgesehen sein, an der Luftversorgungsanlage eine Kühllufttemperatur oder eine Umgebungstemperatur zu bestimmen, um ungewünschte, schädliche Wärmeentwicklungen zu erfassen. Des Weiteren kann es vorteilhaft sein, die generierte und geförderte Druckluft zu überwachen, insbesondere zu messen, um dessen Zusammensetzung, insbesondere das Vorhandensein von Fremdpartikeln, wie Ölpartikeln, zu identifizieren, insbesondere zu messen.

Die folgenden Beispiele sollen die Funktionsweise des Steuerns, insbesondere Regelns, und/oder Überwachens der Luftversorgungsanlage durch den Umrichter veranschaulichen. Beispielsweise kann dem Kompressor ein Drucksensor zugeordnet sein. Wenn der Kompressor von dem Umrichter ein Start-Steuersignal erhält, der Drucksensor jedoch keine, vorzugsweise keine erhebliche, Druckänderung insbesondere im Vergleich zur Ausgangsstellung bzw. zum unbetätigten Zustand detektiert, kann der Umrichter einen fehlerhaften Betrieb des Kompressors identifizieren. Des Weiteren kann der wenigstens eine Sensor dem Lufttrockner und insbesondere dessen Luftbehältern zugeordnet sein, um deren Druckwert zu erfassen. Der Umrichter ist dazu eingerichtet, den erfassten Druckwert/die erfassten Druckwerte miteinander und/oder mit vorgegebenen, zu erwartenden, Druckwerten für den jeweiligen Betriebszustand zu vergleichen und einen fehlerhaften Betriebszustand des Lufttrockners zu identifizieren, wenn eine Abweichung, insbesondere eine Toleranzgrößere überschreitende Abweichung, vorliegt. Der Umrichter kann dazu eingerichtet sein, durch das Überwachen der Kühllufttemperatur und/oder der Umgebungstemperatur auf einen Kühlungszustand der Luftversorgungsanlage zu überwachen. Der Sensor kann dabei eine Differenztemperatur zwischen einem Kompressoreingang bzw. der Umgebungsluft und einem Kompressorausgang bestimmen, anhand dessen der Umrichter den Kühlungszustand des Kompressors, insbesondere der Luftversorgungsanlage überwachen kann. Beispielsweise ist der Umrichter dazu eingerichtet, einen Fehlbetriebszustand des Kompressors festzustellen, falls die erfasste Temperaturdifferenz zu hoch ist. Der wenigstens eine Sensor kann ferner eine Druckdifferenz eingangsseitig und ausgangsseitig eines Eingangsfilters des Kompressors bestimmen. Beispielsweise ist der Umrichter dazu eingerichtet, den erfassten Differenzdruck mit einem Grenzwert zu vergleichen, anhand dessen der Umrichter feststellen kann, ob der Eingangsfilter defekt, insbesondere blockiert, ist. Des Weiteren kann der Umrichter dazu eingerichtet sein, anhand des Differenzdrucks eingangsseitig und ausgangsseitig des Eingangsfilters zu identifizieren, ob ein Sättigungs-/Abnutzungsgrad des Eingangsfilters vorliegt und gegebenenfalls Wartungsmaßnahmen initiieren. In einem weiteren Beispiel der vorliegenden Erfindung kann der wenigstens eine Sensor die komprimierte Lufttemperatur erfassen und der wenigstens eine Umrichter den Arbeitszyklus des Lufttrockners steuern, insbesondere regeln, und/oder optimieren. Beispielsweise kann der Umrichter dazu eingerichtet sein, basierend auf einem Druckgradienten des Kompressors und/oder des Lufttrockners eine Luftabgabekapazität des Kompressors zu analysieren, um beispielsweise auch eine Abnutzung und/oder eine Effizienz des Kompressors zu bestimmen.

In einer beispielhaften Ausführung der erfindungsgemäßen Luftversorgungsanlage ist der Umrichter, vorzugsweise dessen Elektronik, dazu ausgebildet, anhand von durch den wenigstens einen Sensor erfassten Temperaturwerten und/oder einer Zeitvorgabe und/oder einer Aufheizzeit wenigstens eines Heizers des Lufttrockners den Betrieb des Heizers, insbesondere dessen Subkomponenten, zu steuern, vorzugweise zu regeln. Beispielsweise kann der Umrichter den Heizer des Lufttrockners entsprechend einer Zeitvorgabe steuern, wobei die Zeitvorgabe beispielsweise eine bestimmte Uhrzeit sein kann und/oder durch eine gewisse Taktung realisiert sein kann. Der Umrichter, vorzugsweise dessen Elektronik, kann ferner dazu ausgebildet sein, anhand eines Druckwerts, vorzugsweise eines Differenzdruckwerts stromaufwärts und stromabwärts, des Kompressors eine Entlüftungseinrichtung zum Entlüften des Kompressors und/oder eine Leerlaufeinrichtung zum Betreiben des Kompressors im Leerlauf zu steuern, vorzugsweise zu regeln. Beispielsweise kann es vorteilhaft sein, den Betrieb des Heizers zu überwachen und/oder zu steuern, um das Einfrieren von vorzugsweise empfindlichen Komponenten/elektrischen Verbrauchern insbesondere des Lufttrockners zu vermeiden, insbesondere bei Außentemperaturen von unter o°C. Beispielsweise kann der wenigstens eine Sensor als Heißleiter, wie ein NTC-Widerstand oder NTC-Thermistor, ausgebildet sein, was im Allgemeinen einen temperaturabhängigen Widerstand darstellt, der bei einem gewissen Widerstandswert einschaltet, vorzugsweise von dem Umrichter derart angesteuert wird, dass der Heizer eingeschaltet wird. Die Deaktivierung des Heizers erfolgt analog bei einem bestimmten weiteren Widerstandswert. Beispielsweise kann eine Temperaturhysterese zwischen dem Einschalt- und Ausschaltwert des Heizers vorgesehen sein, insbesondere um ein kontinuierliches Ein- und Ausschalten zu vermeiden. Die Leerlaufeinrichtung kann dem Kompressor derart zugeordnet sein, dass bei einem fehlerhaften und/oder zu kurzen Betrieb der Kompressor in einen Leerlauf geschaltet wird, oder komprimierte Luft ins Freie entlüftet wird, so dass die Laufzeit des Kompressors künstlich verlängert wird, um ungünstige Betriebszustände, z.B. einen zu kühlen Betrieb durch kurze Laufzeiten, zu verhindern.

Gemäß einer beispielhaften Ausführung der vorliegenden Erfindung weist der Umrichter, vorzugsweise dessen Elektronik, eine Eingangsschnittstelle zum Empfangen der Messgröße von dem wenigstens einen Sensor auf. Beispielsweise kann die Schnittstelle sowie der wenigstens eine Sensor zur kabellosen Signalübertragung ausgebildet sein. Der Umrichter kann außerdem eine Speichereinheit zum Speichern der empfangenen Messgröße aufweisen. Beispielsweise ist angedacht, dass Umrichter Sensordaten auswertet und vorbestimmte Kennwerte, wie z.B. eine Anzahl an Einschaltungen, eine durchschnittliche Laufzeit, eine Laufzeit bei vorbestimmten Temperaturen, oder dergleichen, abspeichert. Auf der Speichereinheit können außerdem relevante Prozessdaten gespeichert werden, wie zum Beispiel ein oder mehrere Betriebsmodi, Laufzeiten, Sensordaten und Umrichter-Betriebsdaten. Beispielsweise im Falle eines Ausfalls oder eines Fehlverhaltens beispielsweise des Kompressors können die obengenannten Daten auf der Speichereinheit abgerufen und zum Analysieren des Ursprungs des Ausfalls bzw. des Fehlverhaltens herangezogen werden.

Gemäß einer beispielhaften Weiterbildung der erfindungsgemäßen Luftversorgungseinheit ist der Umrichter, vorzugsweise dessen Elektronik, dazu ausgelegt, anhand der empfangenen Messgröße einen Betriebszustand der Luftversorgungsanlage, insbesondere wenigstens eines Verbrauchers der Gruppe von mehreren Verbrauchern, zu überwachen. Insbesondere ist der Umrichter dazu ausgelegt, anhand der empfangenen Messgröße einen Betrieb der Luftversorgungsanlage, insbesondere wenigstens eines Verbrauchers der Gruppe von mehreren elektrischen Verbrauchern, zu steuern, insbesondere zu regeln. Vorzugsweise kann auf Basis der empfangenen Messgrößen eine Regelung des Betriebs der Luftversorgungsanlage bzw. des wenigstens einen, vorzugsweise sämtlicher, elektrischen Verbrauchers der Gruppe von mehreren elektrischen Verbrauchern erfolgen. Dadurch, dass die Umrichterelektronik als zentrale, intelligente Elektronik der gesamten Luftversorgungsanlage, insbesondere sämtlichen der Gruppe von mehreren elektrischen Verbrauchern, zugeordnet ist und Steuerungs-, Regelungs- sowie Überwachungsfunktionen übernimmt, kann auf zusätzliche Elektronikkomponenten, wie Steuerungen und/oder Schnittstellen, teilweise oder vollkommen verzichtet werden. Im Vergleich zu bekannten Luftversorgungsanlagen ist der Umrichter gemäß der vorliegenden Erfindung nicht mehr nur dafür verantwortlich, die Betriebsspannung und/oder Betriebsfrequenz für wenigstens einen der Gruppe von elektrischen Verbrauchern der Luftversorgungsanlage zu generieren/umzurichten, sondern übernimmt Steuerungs-, Regelungs- und/oder Überwachungsfunktionen während des Betriebs der Luftversorgungsanlage. Vorzugsweise erhält der Umrichter über den integrierten wenigstens einen Sensor die zur Regelung und/oder Überwachung notwendigen Informationen über den Betrieb der Luftversorgungsanlage. Anhand dieser Daten kann der Umrichter als zentrale Intelligenz der Luftversorgungsanlage dessen Betrieb bedarfs- und/oder betriebspunktabhängig steuern, insbesondere regeln, sowie Wartungsmaßnahmen einleiten und Diagnosemaßnahmen durchführen, also überwachen.

In einer weiteren beispielhaften Ausführung der erfindungsgemäßen Luftversorgungsanlage weist der Umrichter eine Diagnoseeinrichtung zum Überwachen des wenigstens einen Betriebsparameters des Umrichters auf. Die Diagnoseeinrichtung kann mit einer geeigneten Software ausgestattet sein. Anhand des wenigstens einen Umrichter-Betriebsparameters kann der Umrichter den Betriebszustand der Luftversorgungsanlage, insbesondere wenigstens eines Verbrauchers, überwachen und/oder den Betrieb des Umrichters variieren, insbesondere um den wenigstens einen Betriebsparameter anzupassen. Die Erfinder der vorliegenden Erfindung haben beispielsweise herausgefunden, dass über die Betriebsparameter des Umrichters auf einen Betriebszustand der Luftversorgungsanlage geschlossen werden kann. Erkennt der Umrichter nun anhand des wenigstens einen Betriebsparameters einen Fehlbetrieb der Luftversorgungsanlage kann der Umrichter durch Variation seiner Steuerausgangswerte auf den Betrieb der Luftversorgungsanlage einwirken , um den Betriebsparameter anzupassen, vorzugsweise an einen in der Speichereinheit hinterlegten Soll-Betriebsparameter.

Gemäß einer beispielhaften Weiterbildung der vorliegenden Erfindung ist der Umrichter dazu eingerichtet sein, den Betrieb eines Lufttrockners der Luftversorgungsanlage in Abhängigkeit von der Kompressordrehzahl und/oder Umgebungstemperatur und/oder Restfeuchte der Luft nach dem Lufttrockner zu steuern, insbesondere zu regeln. Vorzugsweise ist der Umrichter dazu eingerichtet, den Betrieb des Lufttrockners in Abhängigkeit von der Kompressordrehzahl derart zu steuern, vorzugsweise zu regeln, dass ein Regenerationsluftverlust des Lufttrockners minimiert und/oder optimiert ist. Die Erfinder der vorliegenden Erfindung haben herausgefunden, dass über die Kompressordrehzahl, die insbesondere abhängig von dem jeweiligen Betriebsmodus einen vorzugsweise vorherbestimmten Sollwert erreichen soll, die Funktionsweise und/oder der Betrieb des Kompressors überwacht werden kann. Dies kann beispielsweise ohne das Vorhandensein eines Sensors erfolgen. Des Weiteren kann der wenigstens eine Sensor dazu ausgelegt sein, eine Drehzahl eines Kompressors der Luftversorgungsanlage zu erfassen.

In einer beispielhaften Ausführung der vorliegenden Erfindung sind in der Speichereinheit Sollgrößen für einen Soll-Betriebszustand der Luftversorgungsanlage, insbesondere für einen Soll-Betriebszustand wenigstens eines Verbrauchers, hinterlegt. Beispielsweise können für jeden der vorgesehenen Betriebsmodi der Luftversorgungsanlage bzw. des Umrichters Sollgrößen für die einzelnen elektrischen Verbraucher der Gruppe von mehreren elektrischen Verbrauchern in der Speichereinheit hinterlegt sein. Beispielsweise kann vorgesehen sein, dass je einer Messgröße eine Sollgröße vorzugsweise des wenigstens einen elektrischen Verbrauchers der Gruppe von mehreren elektrischen Verbrauchern zugeordnet ist. Daher kann der Umrichter dazu in der Lage sein, eine umfangreiche und/oder verbraucherspezifische Diagnose des Betriebs des jeweiligen elektrischen Verbrauchers durchzuführen. Gemäß einer Weiterbildung ist die Auswerteeinheit dazu eingerichtet, die empfangene Messgröße mit einer dieser zugeordneten Sollgröße für einen Soll-Betriebszustand der Luftversorgungsanlage, insbesondere für einen Soll-Betriebszustand mindestens eines elektrischen Verbrauchers der Gruppe von mehreren elektrischen Verbrauchern, zu vergleichen. Mittels des Vergleichs kann der Umrichter eine aussagekräftige und/oder verbraucherspezifische Überwachung/Diagnose des jeweiligen Betriebszustands durchführen. Des Weiteren kann der Umrichter auf Basis des Vergleichs/der Diagnose den Betrieb der Luftversorgungsanlage, insbesondere des wenigstens einen elektrischen Verbrauchers, anpassen, beispielsweise durch geeignete Steuerungs-/Regelungseingriffe.

Gemäß einer beispielhaften Weiterbildung der vorliegenden Erfindung ist der Umrichter, insbesondere die Auswerteeinheit, dazu ausgebildet, anhand des Vergleichs der empfangenen Messgröße mit der dieser zugeordneten Sollgröße einen Fehl-Betriebszustand der Luftversorgungsanlage, insbesondere wenigstens eines elektrischen Verbrauchers der Gruppe von mehreren elektrischen Verbrauchern, der Luftversorgungsanlage zu identifizieren, wenn die empfangene Messgröße von der dieser zugeordneten Sollgröße abweicht. Insbesondere kann eine vorzugsweise vordefinierte Toleranzabweichung definiert sein, so dass ein Fehl-Betriebszustand nur dann erkannt wird, wenn die Abweichung die Toleranzabweichung überschreitet. Beispielsweise können sämtliche Vergleichsdaten in der Speichereinheit hinterlegt sein und/oder einer übergeordneten Elektronik zur Verfügung gestellt sein. Vorzugsweise führt der Umrichter kontinuierlich, gemäß einer gewissen vorbestimmten Taktung und/oder gemäß einer Zeitvorgabe den Soll-Ist-Vergleich durch. Des Weiteren kann vorgesehen sein, dass der wenigstens eine Sensor bei Erfassen eines bestimmten Messwerts das Durchführen eines Soll-Ist-Vergleichs durch den Umrichter auslöst, triggert.

In einer beispielhaften Ausführung der vorliegenden Erfindung ist der Umrichter dazu ausgebildet, anhand der empfangenen Messgröße, insbesondere anhand des Vergleichs aus empfangener Messgröße und dieser zugeordneter Sollgröße, vorzugsweise im Falle eines Fehl-Betriebszustands der Luftversorgungsanlage, insbesondere wenigstens eines der Gruppe von mehreren elektrischen Verbrauchern, den Betrieb der Luftversorgungsanlage, insbesondere des wenigstens einen der Gruppe von mehreren elektrischen Verbrauchern, anzupassen. Aufgrund der Überwachung des Betriebs der Luftversorgungsanlage erhält der Umrichter die prozessrelevanten Messdaten. Auf dieser Basis kann der Umrichter beispielsweise dazu eingerichtet sein, auf den Betrieb der Luftversorgungsanlage einzuwirken, um Beschädigungen der elektrischen Verbraucher sowie deren Komponenten zu vermeiden und gegebenenfalls erneut einen Soll-Betriebszustand der Luftversorgungsanlage, insbesondere des wenigstens einen der Gruppe von elektrischen Verbrauchern, herzustellen. Beispielsweise kann der Umrichter in einen Notbetrieb schalten, Abschalten oder Warnsignale an eine übergeordnete Elektronik bereitstellen, sowie selbst Wartungsmaßnahmen einleiten. In einer beispielhaften Weiterbildung der erfindungsgemäßen Luftversorgungsanlage weist der Umrichter eine Kommunikationsschnittstelle auf, die dazu ausgelegt ist, von einer separaten Ausleseeinrichtung ausgelesen zu werden und/oder vorzugsweise kabellos mit einer übergeordneten Elektronik, wie einer Fahrzeugsteuerung, einer Bremssteuerung und/oder einer stationären Datenverarbeitungseinrichtung, zu kommunizieren. Beispielsweise kann die Kommunikationsschnittstelle auch als Diagnoseschnittstelle ausgebildet sein, wobei im Vergleich zur Kommunikationsschnittstelle, welche beispielsweise kontinuierlich Daten mittels eines Datenübertragungssystems, wie ein Bus, übertragen kann, eingleisig, das heißt in einer Richtung, Daten zur Verfügung stellt. Die Übertragung kann beispielsweise auf Basis der Mobilfunktechnik und/oder eines kabellosen Internetprotokolls erfolgen, wobei beispielsweise die Kommunikation anhand von Handy-Funkmasten in der Umgebung des Schienenfahrzeugs erfolgt. Alternativ oder zusätzlich kann eine Kommunikation/Datenübertagung auch über Datenkabel erfolgen.

In einer beispielhaften Ausführung der vorliegenden Erfindung ist der Umrichter dazu ausgebildet, ein Analog-Steuersignal zum Steuern, insbesondere Regeln, wenigstens eines der Gruppe von mehreren elektrischen Verbrauchern zu erzeugen. Beispielsweise kann das Analog-Steuersignal im Bereich von 4 bis 20 mA liegen. Gemäß einer Weiterbildung wird ein Lüfter bzw. Gebläse zur Kühllufterzeugung der Luftversorgungsanlage über das Analog-Steuersignal gesteuert, insbesondere geregelt.

Gemäß einer beispielhaften Ausführung der vorliegenden Erfindung ist der Umrichter direkt an eine Fahrleitung, wie eine dritte Schiene oder eine Oberleitung, der Stromversorgung zu dessen Versorgung mit Strom angebunden. Es ist jedoch auch denkbar, dass ein Hilfsbetriebeumrichter, der in der Regel dazu dient, Nebenaggregate, wie eine Luftpresse, einen Lüfter, sowie Öl- und Wasserkühler, mit elektrischer Energie zu versorgen, zwischen Fahrleitung und Umrichter zwischengeschaltet ist. Im Falle des Vorhandenseins eines Hilfsbetriebeumrichters empfängt der Umrichter von dem Hilfsbetriebeumrichter eine geglättete, bereinigte Spannung und/oder Frequenz.

In einer weiteren beispielhaften Ausführung der erfindungsgemäßen Luftversorgungsanlage ist der Umrichter an eine zusätzliche elektrische Energiequelle, wie eine Batterie oder einen Akkumulator, angeschlossen, mittels der die Luftversorgungsanlage insbesondere im Falle eines Ausfalls der Stromversorgung, insbesondere der Haupt-Stromversorgung, welche wie zuvor beschrieben über eine Fahrleitung oder über einen Hilfsbetriebeumrichter erfolgt, betreibbar ist. Beispielsweise kann der Betrieb mittels der elektrischen Energiequelle dazu vorgesehen sein, den Kompressor lediglich über die Energiequellenleistung zu betreiben, um den pneumatischen Kreislauf des Pantographen aufzufüllen. In der Regel ist der Kreislauf des Pantographen pneumatisch von dem restlichen pneumatischen System des Schienenfahrzeugs, insbesondere mittels eines Rückschlagventils, getrennt. Beispielsweise kann ein maximaler Betriebsdruck 8 bar betragen, insbesondere um zu vermeiden, dass der Kompressor überhitzt, der Umrichter überhitzt, die Energiequelle sich entleert oder der Lufttrockner überlastet wird.

Gemäß einem weiteren Aspekt der vorliegenden Erfindung, der mit den vorhergehenden Aspekten und beispielhaften Ausführungen kombinierbar ist, ist ein Verfahren zum Regeln und/oder Überwachen einer Luftversorgungsanlage mit einer Gruppe von mehreren elektrischen Verbrauchern, wie ein Kompressor, ein Lufttrockner, ein Ventil, oder dergleichen, und einem an einer Stromversorgung eines Schienenfahrzeugs gekoppelten Umrichter zum Anpassen der von der Stromversorgung bereitgestellten Spannung und/oder Frequenz an eine Betriebsspannung und/oder Betriebsfrequenz wenigstens eines elektrischen Verbrauchers der Gruppe von mehreren elektrischen Verbrauchern, mit der der elektrische Verbraucher zu betreiben ist, eines Schienenfahrzeugs bereitgestellt. Bei dem Verfahren wird Strom der Luftversorgungsanlage bereitgestellt. Ferner werden/wird eine Betriebsspannung und/oder eine Betriebsfrequenz wenigstens eines elektrischen Verbrauchers der Gruppe von mehreren elektrischen Verbrauchern aus der Stromversorgung mittels des Umrichters generiert. Gemäß diesem Aspekt der vorliegenden Erfindung wird der Betrieb von wenigstens zwei, vorzugsweise sämtlichen, der Gruppe von mehreren elektrischen Verbrauchern mittels des Umrichters gesteuert, vorzugsweise geregelt, und/oder überwacht.

Gemäß einer Weiterbildung des erfindungsgemäßen Verfahrens ist das Verfahren derart ausgebildet, dass es die Luftversorgungsanlage nach einem der vorstehenden Aspekte oder beispielhaften Ausführungen realisiert.

Bevorzugte Ausführungen sind in den Unteransprüchen geben.

Im Folgenden werden weitere Eigenschaften, Merkmale und Vorteile der Erfindung mittels Beschreibung bevorzugter Ausführungen der Erfindung anhand der beiliegenden beispielhaften Zeichnungen deutlich, in denen zeigen:
- Fig. 1: einen Ausschnitt eines schematischen Blockschaltdiagramms einer Luftversorgungsanlage für ein Schienenfahrzeug; und
- Fig. 2: einen Detailausschnitt des Blockschaltdiagramms nach Fig. 1.

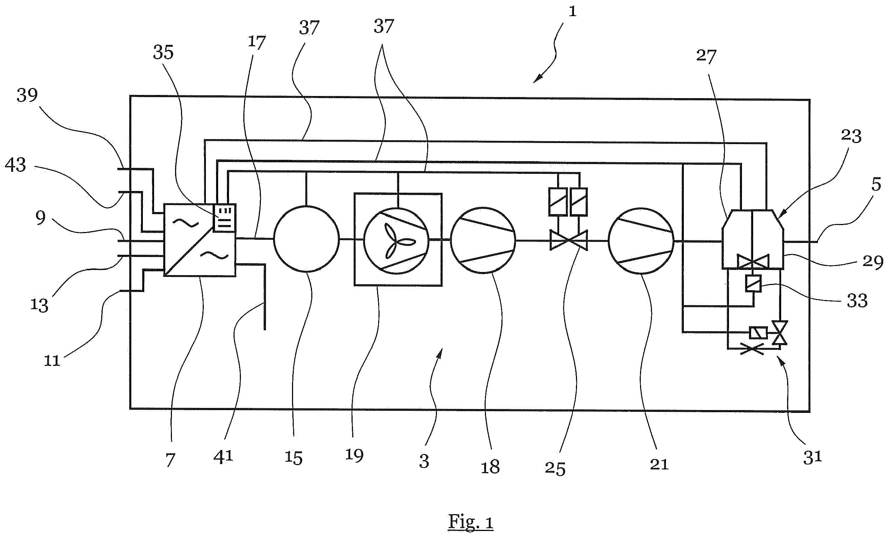

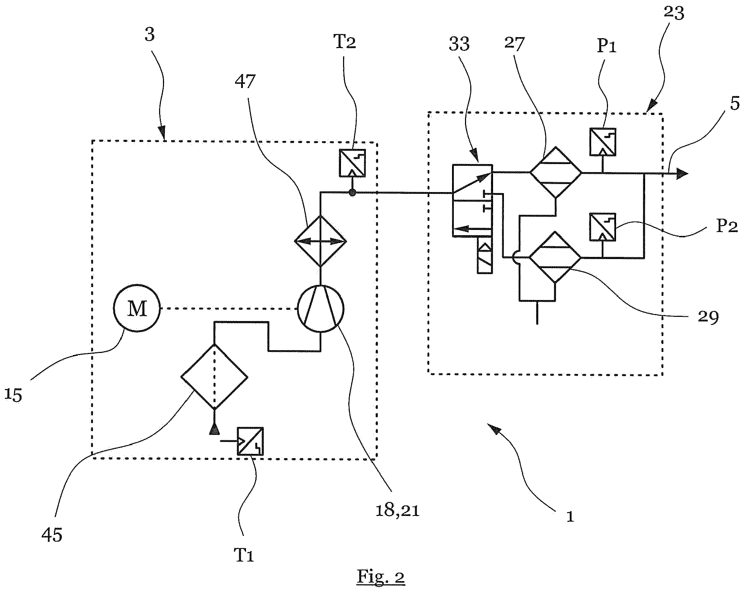

In der folgenden Beschreibung beispielhafter Ausführungen ist eine erfindungsgemäße Luftversorgungsanlage im Allgemeinen mit Bezugsziffer 1 versehen. Es sei klar, dass die Figuren 1 und 2 lediglich Ausschnitte einer Luftversorgungsanlage 1, d.h. nur einen Teil der Gruppe von elektrischen, der Luftversorgungsanlage zugeordneten Verbrauchern, darstellen.

In dem beispielhaften Blockschaltbild gemäß Fig. 1 ist eine Gruppe von mehreren elektrischen Verbrauchern nebeneinander in Reihe geschaltet, wobei in Fig. 1 von links nach rechts betrachtet, was einer Strömungsrichtung der Luft, insbesondere Druckluft, und/oder einer Luftzirkulationsrichtung entspricht, beginnend mit einer Drucklufterzeugung 3 bis zu einer Druckluftabgabe 5 abgebildet. Ein an eine Stromversorgung (nicht näher dargestellt) des Schienenfahrzeugs gekoppelter Umrichter 7 zum Anpassen der von der Stromversorgung bereitgestellten Spannung und/oder Frequenz an eine Betriebsspannung und/oder Betriebsfrequenz wenigstens eines elektrischen Verbrauchers der Gruppe von mehreren insbesondere hintereinander geschalteten elektrischen Verbrauchern, mit der der jeweilige elektrische Verbraucher zu betreiben ist, ist an eine Stromversorgungsleitung 9, insbesondere Hauptstromversorgung mit etwa 400 VAC oder 680 VDC, gekoppelt. Über eine Batterieversorgungsleitung 11 (24 V bis 110 V), die der Energieversorgung der Umrichterelektronik und dessen Subkomponenten dient, ist der Umrichter 7 an eine elektrische Energiequelle (nicht näher dargestellt), wie Batterie oder Akkumulator, gekoppelt. Der Umrichter 7 richtet die Spannung und/oder Frequenz der Hauptstromversorgungsleitung 9 entsprechend eines gewünschten und/oder vordefinierten Betriebsmodus und/oder einer Drehzahl eines Kompressors um, wobei die umgerichtete Spannung und/oder Frequenz einem Kompressormotor 15 über eine schematisch in Fig. 1 dargestellte Versorgungsleitung 17 zur Verfügung gestellt wird. Der Umrichter 7 ist außerdem über eine Energieversorgungsleitung 13 mit der elektrischen Energiequelle (nicht dargestellt), wie Batterie oder Akkumulator, gekoppelt, insbesondere um in einem Hilfsbetriebsmodus kurzzeitig Luft für einen nicht näher dargestellten Pantographen bereitzustellen (96 bis 110 V).

Als weitere elektrische Verbraucher sind, von links nach rechts in Fig. 1, betrachtet, das heißt in Luftströmungsrichtung, ein Gebläse 19, ein Niedrigdruckabschnitt 18, ein Hochdruckabschnitt 21 und ein Lufttrockner 23 hintereinander geschaltet, aus dem die Druckluftabgabeleitung 5 bereitgestellt wird. Zwischen dem Niedrigdruckabschnitt 18 und dem Hochdruckabschnitt 21 ist optional ein Entlüftungsventil 25 angeordnet, welches über die Energieversorgung von der elektrischen Energiequelle mittels der Versorgungsleitung 17 mit elektrischer Energie versorgt wird. Der Lufttrockner 23 ist beispielsweise als Absorptions-Regenerations-Trockner ausgebildet und weist zwei parallel geschaltete Druckluftbehälter 27, 29 auf. Die beiden Druckluftbehälter 27, 29 sind dabei derart in den Drucklufterzeugungs- und Reinigungsprozess eingebunden, dass ein Druckluftbehälter 27, 29 einen Lufttrocknungsprozess durchführt, während der andere Druckluftbehälter 29, 79 einen Regenerationsprozess ausführt. Das Wechseln der Druckluftbehälter 27, 29 bzw. das Hin- und Herschalten zwischen den beiden Druckluftbehältern 27, 29 erfolgt über ein Umschaltventil 33, das den beiden Druckluftbehältern 27, 29 zugeordnet ist. Ein Regenerationssteuerungsventil 31 kann mit dem Umschaltventil 33 zusammenwirken, um die Steuerung des Lufttrocknerbetriebs zu realisieren.

Der Umrichter 7 weist eine Elektronik auf, die in Fig. 1 schematisch durch das Blockschaltbild mit der Bezugsziffer 35 versehen ist und welche eine Speichereinheit zum Speichern von Daten aufweisen kann. Aus Fig. 1 geht hervor, dass der Umrichter sämtlichen der in Fig. 1 dargestellten elektronischen Verbrauchern, nämlich dem Kompressormotor 15, dem Gebläse 19, den Ventilen 25, 31 und 33 sowie dem Lufttrockner 23, zugeordnet ist, so dass der Umrichter deren Betrieb steuern, regeln und/oder überwachen kann. Dazu sind schematisch dargestellte Steuer- und/oder Sensorleitungen 37 vorgesehen, mittels der der Umrichter 7 mit den elektronischen Verbrauchern 15, 19, 25, 31, 33, 23 verbunden ist, wobei klar ist, dass der Umrichter 7 entsprechende Signalausgänge und die elektrischen Verbraucher 15, 19, 95, 31, 33, 23 entsprechende Signaleingänge besitzen. Über die Sensor- und/oder Steuerleitungen 37 ist der Umrichter 7 signalübertragungsgemäß mit den elektronischen Verbrauchern verbunden, um deren Betrieb beispielsweise in Abhängigkeit von einer Kompressordrehzahl und/oder in Abhängigkeit von einem vordefinierten und/oder von einer übergeordneten Elektronik (nicht dargestellt) vorgegebenen Betriebsmodus zu steuern, zu regeln und/oder zu überwachen. Der Umrichter 7 schaltet dazu den von der elektrischen Energiequelle mittels der Versorgungsleitung 9, 11, 13 erhaltenen Strom durch, um die jeweiligen elektronischen Verbraucher zu aktivieren bzw. zu deaktivieren. Die Sensor- und/oder Steuerleitungen 37 können als NTC-Widerstand ausgebildet sein oder einen NTC-Widerstand (nicht dargestellt) aufweisen, deren Messwerte der Umrichter 7 überwacht, insbesondere um den Betrieb der jeweiligen elektronischen Verbraucher bzw. Luftversorgungsanlage 1 zu steuern, zu regeln und/oder zu überwachen. Beispielsweise überwacht der Umrichter die den Heizungspatronen des Lufttrockners 23 zugeordneten NTC-Widerstände, und entsprechend der erfassten Temperaturwerte beispielsweise des Trocknergehäuses, der Umgebung, der Kühlluft und/oder der geförderten Druckluft, um die Heizungspatrone zu aktivieren/zu deaktivieren. Dies erfolgt wiederum durch Durchschalten des von der elektrischen Energiequelle erhaltenen Stroms mittels der Energieversorgungsleitung 11.

Der Umrichter 7 ist außerdem an eine Steuereingangsleitung 39 gekoppelt, über die der Umrichter 7 von einer übergeordneten Elektronik (nicht dargestellt), wie eine Fahrzeugsteuerung oder Bremssteuerung, einen Steuerbefehl erhalten kann, welche Informationen über den Betriebszustand und/oder die Kompressordrehzahl enthält, den/die der Umrichter 7 in der Luftversorgungsanlage 1 einzustellen hat.

Ferner können eine oder mehrere Sensoren (nicht dargestellt) zum Erfassen einer luftspezifischen Messgröße, wie Temperatur, Druck, Luftfeuchtigkeit, oder dergleichen, einer verbraucherspezifischen Messgröße, wie Betriebsdruck, Temperatur, Verschleiß, Eingangs- oder Ausgangsleistung, oder eines Betriebsparameters des Umrichters 7, wie Spannung oder Temperatur, vorgesehen sein und signalübertragungsgemäß mittels einer Sensorleitung 41 mit dem Umrichter 7 verbunden sein. Es sei klar, dass der Umrichter 7 entsprechend ausgebildete und eingerichtete Signaleingänge besitzt. Der Umrichter 7 kann demnach auch dazu ausgelegt sein, anhand der erfassten Sensor-Messdaten den Betrieb der Luftversorgungsanlage zu steuern, zu regeln und/oder zu überwachen. Der Umrichter 7 weist außerdem eine Ethernet- oder CAN-Schnittstelle 43 auf, die beispielsweise als Diagnoseschnittstelle zum Übertragen der Messdaten, insbesondere Diagnosedaten, der Luftversorgungsanlage 1 an die übergeordnete Elektronik, oder als Kommunikationsschnittstelle zum Übermitteln von Messdaten bzw. Diagnosedaten und zum Empfangen von Steuersignalen gestaltet sein kann. Darüber hinaus kann die die Umrichterelektronik eine vorbereitete Schnittstelle für eine Adapterkarte aufweisen, mit dessen Hilfe weitere Kommunikationsprotokolle realisiert werden können (z.B. MVB, Dual CAN, Ethernet TRDP, Profinet, oder dergleichen). Der Umrichter kann nun dazu eingerichtet sein, den Betrieb des Lufttrockners 23 in Abhängigkeit von der Kompressordrehzahl zu steuern, insbesondere zu regeln. Beispielsweise kann der Umrichter 7 den Betrieb des Lufttrockners 23 derart steuern, insbesondere regeln, dass ein Regenerationsluftverlust beim Umschalten zwischen den beiden Druckluftbehältern 27, 29 minimiert und/oder optimiert ist.

Anhand von Fig. 2, die einen Detailausschnitt eines Blockschaltdiagramms einer erfindungsgemäßen Luftversorgungseinheit 1 darstellt, wobei lediglich der Kompressor 3 und der Lufttrockner 23 blockschaltbildgemäß dargestellt sind, wird die Funktionsweise der erfindungsgemäßen Luftversorgungsanlage 1 beispielhaft erläutert. Der Kompressor 3 umfasst den Motor 15, sowie den Niedrigdruckabschnitt 18 und den Hochdruckabschnitt 21, die bereits in Fig. 1 dargestellt waren. Zusätzlich ist in Fig. 2 noch ein Lufteinlass bzw. Ansaugfilter 45 zu sehen, von dem aus die Luft in den Niederdruck- bzw. Hochdruckabschnitt 18, 21 übergeht. Hinter den Hochdruck- bzw. Niederdruckabschnitten 18, 21 ist ein Nachkühler 47 zum Herunterkühlen der komprimierten Druckluft vorgesehen. Am Lufteingangsbereich 45 ist ein Temperatursensor T₁ zum Messen der Lufteingangstemperatur bzw. der Umgebungstemperatur, die der Kühlluftemperatur entspricht, und nach dem Nachkühler 47 ist ein zweiter Temperatursensor T₂ zum Messen der Temperatur des gekühlten Verdichtungsgases vorgesehen. Der Lufttrockner 23 enthält, wie bereits beschrieben, das Umschaltventil 33, zwei parallel geschaltete Luftdruckbehälter 27, 29 sowie zwei, jeweils einem der Druckluftbehälter 27, 29 zugeordneten Drucksensoren p₁, p₂ zum Messen des jeweils herrschenden Drucks in dem Behälter 27, 29 (Das Regenerationsluftsteuerventil ist in dieser Variante nicht dargestellt). Der Temperatursensor T₁ kann beispielsweise dazu ausgebildet sein, eine Umgebungstemperatur beispielsweise am Lufteinlassbereich 45 zu messen. Es kann vorgesehen sein, dass ein Temperaturwert T₁ von kleiner als 50°C als Sollbetrieb erfasst wird, während ein Fehlbetrieb vorliegt, wenn der Temperaturwert T₁ größer als 50°C für eine Zeitspanne von etwa 10 Minuten ist. Der Umrichter 7 ist dazu ausgebildet, die gemessenen Temperaturwerte von dem Temperatursensor T₁ zu erfassen und anhand der gemessenen Temperaturwerte den Betrieb der Luftversorgungsanlage 1, insbesondere des Kompressors 3, zu steuern, insbesondere zu regeln, und/oder zu überwachen. Beispielsweise kann der Umrichter 7 einen Alarm ausgeben, der auf einen Fehlbetrieb hindeutet und/oder eine Wartungsmaßnahme auslöst. Des Weiteren kann der Umrichter 7 dazu eingerichtet sein, die von den Drucksensoren p₁, p₂ erfassten Druckwerte zu überwachen, wobei der Umrichter 7 derart eingerichtet sein kann, dass 10 Sekunden nach dem Aktivieren des Kompressors 3 der Druckwert p₁ oder p₂ größer sein soll, so dass bei einem Druckwert p₁, p₂ von kleiner als 5 bar auf einen Fehlbetrieb geschlossen werden kann. Außerdem ist der Umrichter 7 dazu eingerichtet, einen Fehlbetrieb zu erkennen, wenn einer der Druckwerte p₁(T) oder p₂(T) größer als 11 bar ist. Gemäß einer weiteren beispielhaften Ausführung kann er Umrichter 7 dazu eingerichtet sein, eine Temperaturdifferenz zwischen den beiden Temperatursensoren T₁, T₂ zu überwachen, wobei eine Temperaturdifferenz von weniger als 20° auf einen Sollbetrieb hinweist, während eine Temperaturdifferenz von über 20° auf einen Fehlbetrieb hinweist. Des Weiteren kann der Umrichter 7 dazu eingerichtet sein, die Druckluftgenerierung und -förderung zu überwachen. Dabei kann ein Sollbetrieb vorliegen, wenn der Druckgradient p₁(T) oder p₂(T) größer oder gleich dem 0,8-Fachen eines vorbestimmten, vorzugsweise von der übergeordneten Elektronik übermittelten, Referenzwert ist. Ferner kann ein Fehlbetrieb vorliegen, wenn p₁(T) oder p₂(T) geringer als das 0,8-Fache des Referenzwerts ist.

Gemäß einer weiteren, nicht dargestellten Ausführung kann dem Kompressor 15 ein Drucksensor zugeordnet sein. Wenn der Kompressor 3 von dem Umrichter 7 ein Start-Steuersignal erhält, der Drucksensor jedoch keine, vorzugsweise keine erhebliche, Druckänderung insbesondere im Vergleich zur Ausgangsstellung bzw. zum unbetätigten Zustand detektiert, kann der Umrichter 7 einen fehlerhaften Betrieb des Kompressors 3 identifizieren. Des Weiteren kann der wenigstens eine Sensor T₂ oder p₂ dem Lufttrockner 23 und insbesondere dessen Luftbehältern 27, 29 zugeordnet sein, um deren Druckwert zu erfassen. Der Umrichter 7 ist dazu eingerichtet, den erfassten Druckwert/die erfassten Druckwerte miteinander und/oder mit vorgegebenen, zu erwartenden, Druckwerten für den jeweiligen Betriebszustand zu vergleichen und einen fehlerhaften Betriebszustand des Lufttrockners 23 zu identifizieren, wenn eine Abweichung, insbesondere eine Toleranzgrößere überschreitende Abweichung, vorliegt. Der Umrichter 7 kann dazu eingerichtet sein, durch das Überwachen der Kühllufttemperatur und/oder der Umgebungstemperatur auf einen Kühlungszustand der Luftversorgungsanlage 1 zu überwachen. In einer weiteren beispielhaften Ausführung bestimmt der Sensor, z.B. T_{1,} eine Differenztemperatur zwischen einem Kompressoreingang bzw. der Umgebungsluft und einem Kompressorausgang zu bestimmen, anhand dessen der Umrichter 7 den Kühlungszustand des Kompressors 3, insbesondere der Luftversorgungsanlage 1 überwachen kann. Beispielsweise ist der Umrichter 7 dazu eingerichtet, einen Fehlbetriebszustand des Kompressors 3 festzustellen, falls die erfasste Temperaturdifferenz zu hoch ist. Der wenigstens eine Sensor kann ferner eine Druckdifferenz eingangsseitig und ausgangsseitig eines Eingangsfilters (nicht näher dargestellt) des Kompressors 3 bestimmen. Beispielsweise ist der Umrichter 7 dazu eingerichtet, den erfassten Differenzdruck mit einem Grenzwert zu vergleichen, anhand dessen der Umrichter 7 feststellen kann, ob der Eingangsfilter defekt, insbesondere blockiert, ist. Des Weiteren kann der Umrichter 7 dazu eingerichtet sein, anhand des Differenzdrucks eingangsseitig und ausgangsseitig des Eingangsfilters zu identifizieren, ob ein Sättigungs-/Abnutzungsgrad des Eingangsfilters und damit des Kompressors 3 vorliegt und gegebenenfalls Wartungsmaßnahmen initiieren. In einem weiteren Beispiel der vorliegenden Erfindung kann der wenigstens eine Sensor, z.B. T₂, die komprimierte Lufttemperatur erfassen und der Umrichter 7 den Arbeitszyklus des Lufttrockners 23 steuern, insbesondere regeln, und/oder optimieren. Beispielsweise kann der Umrichter 7 dazu eingerichtet sein, basierend auf einem Druckgradienten des Kompressors 3 und/oder des Lufttrockners 23 eine Luftabgabekapazität des Kompressors 3 zu analysieren, um beispielsweise auch eine Abnutzung und/oder eine Effizienz des Kompressors 3 zu bestimmen.

### Bezugszeichenliste

- 1: Luftversorgungsanlage
- 3: Drucklufterzeugung
- 5: Druckluftabgabe
- 7: Umrichter
- 9: Hauptstromversorgungsleitung
- 11, 13: Energieversorgungsleitung
- 15: Motor
- 17: Versorgungsleitung
- 18: Niedrigdruckabschnitt
- 19: Gebläse
- 21: Hochdruckabschnitt
- 23: Lufttrockner
- 25: Entlüftungsventil
- 27,29: Luftbehälter
- 31: Regenerationssteuerungsventil
- 33: Umschaltventil
- 35: Elektronik
- 37: Sensorleitung
- 39: Steuereingangsleitung
- 41: Sensorleitung
- 43: Schnittstelle
- 45: Lufteingangsbereich
- 47: Nachkühler

- p₁, p₂: Drucksensor
- T₁, T₂: Temperatursensor

## Patentansprüche

1. Luftversorgungsanlage (1) für ein Schienenfahrzeug, umfassend
- eine Gruppe von mehreren elektrischen Verbrauchern, wie ein Kompressor, ein Lufttrockner, ein Ventil, oder dergleichen, wobei die mehreren elektrischen Verbraucher jeweils unterschiedliche Funktionen der Luftversorgungsanlage entlang einer Strömung der Druckluft übernehmen, und
- einen an eine Stromversorgung des Schienenfahrzeugs gekoppelten Umrichter (7) zum Anpassen der von der Stromversorgung bereitgestellten Spannung und/oder Frequenz an eine Betriebsspannung und/oder Betriebsfrequenz wenigstens eines elektrischen Verbrauchers, mit der der elektrische Verbraucher zu betreiben ist,
**dadurch gekennzeichnet, dass** der Umrichter (7) wenigstens zwei, vorzugsweise sämtlichen, der Gruppe von mehreren elektrischen Verbrauchern derart zugeordnet ist, dass der Umrichter (7) den Betrieb der wenigstens zwei der Gruppe von mehreren elektrischen Verbrauchern steuern, insbesondere regeln, und/oder überwachen kann.

2. Luftversorgungsanlage (1) nach Anspruch 1, wobei der Umrichter (7) eine Elektronik (35) aufweist, die dazu eingerichtet ist, die von der Stromversorgung bereitgestellte Spannung und/oder Frequenz an die Betriebsspannung und/oder Betriebsfrequenz des wenigstens einen elektrischen Verbrauchers umzurichten, und/oder die derart signalübertragungsgemäß mit den wenigstens zwei der Gruppe von mehreren Verbrauchern verbunden ist, dass die Elektronik (35) deren Betrieb vorzugsweise anhand von in der Elektronik (35) hinterlegten Steueralgorithmen steuern kann und/oder anhand von in der Elektronik (35) hinterlegten Auswertealgorithmen überwachen kann.

3. Luftversorgungsanlage (1) nach einem der vorstehenden Ansprüche, wobei wenigstens ein Sensor zum Erfassen einer luftspezifischen Messgröße, wie Temperatur, Druck, Luftfeuchtigkeit, oder dergleichen, und/oder zum Erfassen einer verbraucherspezifischen Messgröße, wie Betriebsstunden, Temperatur, Verschleiß, Eingangs- oder Ausgangsleistung, und/oder zum Erfassen eines Betriebsparameters des Umrichters, wie Spannung oder Temperatur, signalübertragungsgemäß mit dem Umrichter (7) verbunden ist, wobei insbesondere der wenigstens eine Sensor derart angeordnet und/oder wenigstens einem der Gruppe von mehreren Verbrauchern zugeordnet ist, dass der Sensor die luftspezifische Messgröße und/oder die verbraucherspezifische Messgröße erfassen kann.

4. Luftversorgungsanlage (1) nach Anspruch 3, wobei der wenigstens eine Sensor dazu ausgebildet ist, einen Druckwert eines Kompressors zu messen, und/oder einen Druckwert eines stromaufwärtigen Eingangsfilters des Kompressors zu messen, und/oder einen Druckwert eines Lufttrockners zu messen, und/oder eine Temperatur des Lufttrockners oder des Kompressors zu messen, und/oder einen Verschmutzungsgrad der Luft zu messen.

5. Luftversorgungsanlage (1) nach Anspruch 3 oder 4, wobei der Umrichter dazu ausgebildet ist, anhand von durch den wenigstens einen Sensor erfassten Temperaturwerten und/oder einer Zeitvorgabe und/oder einer Aufheizzeit wenigstens eines Heizers des Lufttrockners den Betrieb des Heizers zu steuern, vorzugsweise zu regeln, und/oder anhand eines Zeitwerts und/oder eines Temperaturwerts eine Entlüftungseinrichtung zum Entlüften des Kompressors und/oder eine Leerlaufeinrichtung zum Betreiben des Kompressors im Leerlauf zu steuern, vorzugsweise zu regeln.

6. Luftversorgungsanlage (1) nach einem der Ansprüche 3 bis 5, wobei der Umrichter eine Eingangsschnittstelle zum Empfangen der Messgröße und/oder eine Speichereinheit zum Speichern der empfangenen Messgröße und/oder von aus der Verarbeitung der Messgrößen resultierenden Kennwerten aufweist.

7. Luftversorgungsanlage (1) nach einem der Ansprüche 3 bis 6, wobei der Umrichter dazu ausgelegt ist, anhand der empfangenen Messgröße einen Betriebszustand der Luftversorgungsanlage (1), insbesondere wenigstens eines Verbrauchers, zu überwachen und insbesondere anhand der empfangenen Messgröße einen Betrieb der Luftversorgungsanlage (1) zu steuern.

8. Luftversorgungsanlage (1) nach einem der vorstehenden Ansprüche, wobei der Umrichter (7) dazu eingerichtet ist, den Betrieb eines Lufttrockners der Luftversorgungsanlage (1) in Abhängigkeit von der Kompressordrehzahl und/oder Umgebungstemperatur und/oder Restfeuchte der Luft nach dem Lufttrockner zu steuern, insbesondere zu regeln, insbesondere derart zu steuern, vorzugsweise zu regeln, dass ein Regenerationsluftverlust des Lufttrockners minimiert ist.

9. Luftversorgungsanlage (1) nach einem der Ansprüche 6 bis 8, wobei in der Speichereinheit Sollgrößen für einen Soll-Betriebszustand der Luftversorgungsanlage (1), insbesondere für einen Soll-Betriebszustand wenigstens eines Verbrauchers, hinterlegt sind, wobei insbesondere je eine Messgröße einer Sollgröße zugeordnet ist.

10. Luftversorgungsanlage (1) nach einem der Ansprüche 3 bis 9, wobei der Umrichter (7) eine Auswerteeinheit zum Verarbeiten der empfangenen Messgröße aufweist, wobei insbesondere die Auswerteeinheit dazu eingerichtet ist, die empfangene Messgröße mit einer dieser zugeordneten Sollgröße für einen Soll-Betriebszustand der Luftversorgungsanlage (1), insbesondere für einen Soll-Betriebszustand wenigstens eines Verbrauchers, zu vergleichen.

11. Luftversorgungsanlage (1) nach Anspruch 10, wobei der Umrichter (7), insbesondere die Auswerteeinheit, dazu ausgebildet ist, anhand des Vergleichs der empfangenen Messgröße mit der dieser zugeordneten Sollgröße einen Fehl-Betriebszustand der Luftversorgungsanlage (1), insbesondere wenigstens eines Verbrauchers der Luftversorgungsanlage (1), zu identifizieren, wenn die empfangene Messgröße von der dieser zugeordneten Sollgröße abweicht, insbesondere eine Abweichung eine vordefinierte Toleranzabweichung überschreitet.

12. Luftversorgungsanlage (1) nach einem der Ansprüche 3 bis 11, wobei der Umrichter (7) dazu ausgebildet ist, anhand der empfangenen Messgröße, insbesondere anhand des Vergleichs aus empfangener Messgröße und dieser zugeordneter Sollgröße, vorzugsweise im Falle eines Fehl-Betriebszustands der Luftversorgungsanlage (1), insbesondere wenigstens eines der Gruppe von mehreren Verbrauchern, den Betrieb der Luftversorgungsanlage (1) anzupassen und/oder Wartungsmaßnahmen einzuleiten.

13. Luftversorgungsanlage (1) nach einem der vorstehenden Ansprüche, wobei der Umrichter (7) eine Kommunikationsschnittstelle aufweist, die dazu ausgebildet ist, von einer separaten Ausleseeinrichtung ausgelesen zu werden und/oder vorzugsweise kabellos mit einer übergeordneten Elektronik zu kommunizieren.

14. Luftversorgungsanlage (1) nach einem der vorstehenden Ansprüche, wobei der Umrichter (7) dazu ausgebildet ist, ein Analog-Steuersignal zum Steuern, insbesondere Regeln, wenigstens eines der Gruppe von mehreren Verbrauchern zu erzeugen.

15. Luftversorgungsanlage (1) nach einem der vorstehenden Ansprüche, wobei der Umrichter (7) an eine zusätzliche elektrische Energiequelle, wie eine Batterie oder einen Akkumulator, angeschlossen ist, mittels der die Luftversorgungsanlage (7) insbesondere im Falle eines Ausfalls der Stromversorgung betreibbar ist.

16. Verfahren zum Regeln und/oder Überwachen einer Luftversorgungsanlage (1) mit einer Gruppe von mehreren elektrischen Verbrauchern, wie ein Kompressor, ein Lufttrockner, ein Ventil, oder dergleichen, wobei die mehreren elektrischen Verbraucher jeweils unterschiedliche Funktionen der Luftversorgungsanlage entlang einer Strömung der Druckluft übernehmen, und einem an eine Stromversorgung eines Schienenfahrzeugs gekoppelten Umrichter (7) zum Anpassen der von der Stromversorgung bereitgestellten Spannung und/oder Frequenz an eine Betriebsspannung und/oder Betriebsfrequenz wenigstens eines elektrischen Verbrauchers, mit der der elektrische Verbraucher zu betreiben ist, eines Schienenfahrzeugs, bei dem
- Strom der Luftversorgungsanlage (1) bereitgestellt wird, und
- eine Betriebsspannung und/oder Betriebsfrequenz wenigstens eines elektrischen Verbrauchers zum Betreiben des elektrischen Verbrauchers aus der Stromversorgung mittels des Umrichters (7) generiert wird,
**dadurch gekennzeichnet, dass** der Betrieb von wenigstens zwei, vorzugsweise sämtlichen, der Gruppe von mehreren elektrischen Verbrauchern mittels des Umrichters (7) gesteuert, vorzugsweise geregelt, und/oder überwacht wird.

17. Verfahren nach Anspruch 16, das derart ausgebildet ist, dass es die Luftversorgungsanlage (1) nach einem der Ansprüche 1 bis 15 regelt und/oder überwacht.

## Claims

1. An air supply system (1) for a rail vehicle, having:
- a group comprising a plurality of electrical consumers such as a compressor, air dryer, valve, etc., this plurality of electrical consumers each performing different functions of the air supply system along a flow of the compressed air, and
- a converter (7), which is coupled to a power supply of the rail vehicle, for adapting the voltage and/or frequency provided by the power supply to an operating voltage and/or an operating frequency of at least one electrical consumer by means of which that electrical consumer is to be operated,
**characterised in that** the converter (7) is assigned to at least two, preferably all, of the group comprising a plurality of electrical consumers such that the converter (7) is able to control, in particular closed-loop control, and/or monitor the operation of the at least two of the group comprising a plurality of electrical consumers.

2. An air supply system (1) according to claim 1, the converter (7) having an electronic system (35) that is configured to convert the voltage and/or frequency provided by the power supply to the operating voltage and/or operating frequency of the at least one electrical consumer, and/or that is connected in terms of signal transmission to the at least two of the plurality of electrical consumers such that the electronic system (35) is able to control their operation, preferably on the basis of control algorithms stored in the electronic system (35), and/or to monitor their operation on the basis of evaluation algorithms stored in the electronic system (35).

3. An air supply system (1) according to either one of the preceding claims, at least one sensor for ascertaining an air-specific measurand such as temperature, pressure, air humidity, etc. and/or for ascertaining a consumer-specific measurand such as operating hours, temperature, wear, input or output power and/or for ascertaining a converter operating parameter such as voltage or temperature being connected in terms of signal transmission to the converter (7), the at least one sensor in particular being arranged and/or being assigned to at least one of the group of a plurality of consumers such that the sensor is able to ascertain the air-specific measurand and/or the consumer-specific measurand.

4. An air supply system (1) according to claim 3, the at least one sensor being designed to measure a pressure value of a compressor and/or to measure a pressure value of an upstream input filter of the compressor and/or to measure a pressure of an air filter and/or to measure a temperature of the air dryer or the compressor and/or to measure a degree of air pollution.

5. An air supply system (1) according to either of claims 3 or 4, the converter being designed to control, preferably to closed-loop control, the operation of a heater on the basis of the temperature values ascertained by the at least one sensor and/or of a time specification and/or of a heating time of the at least one heater of the air dryer, and/or to control, preferably to closed-loop control, a venting device for venting the compressor and/or an idling device for operating the compressor in idling mode on the basis of a time value and/or a temperature value.

6. An air supply system (1) according to any one of claims 3 to 5, the converter having an input interface for receiving the measurand and/or a storage unit for storing the measurand received and/or characteristic values resulting from the processing of the measurands.

7. An air supply system (1) according to any one of claims 3 to 6, the converter being designed to monitor an operating state of the air supply system (1), in particular of at least one consumer, on the basis of the measurand received, and to control operation of the air supply system (1) in particular on the basis of the measurand received.

8. An air supply system (1) according to any one of the preceding claims, the converter (7) being configured so as to control, in particular closed-loop control, the operation of an air dryer of the air supply system (1) dependent on the compressor speed and/or the ambient temperature and/or the residual humidity of the air downstream of the air dryer, and in particular to control, preferably to closed-loop control, this operation so as to minimise regeneration air loss of the air dryer.

9. An air supply system (1) according to any one of claims 6 to 8, setpoint values for a setpoint operating state of the air supply system (1), in particular for a setpoint operating state of at least one consumer, being stored in the storage unit, in particular with one measurand being assigned to each setpoint variable.

10. An air supply system (1) according to any one of claims 3 to 9, the converter (7) having an evaluation unit for processing the measurand received, the evaluation unit in particular being set up so as to compare the measurand received with a setpoint variable for a setpoint operating state of the air supply system (1) assigned to the measurand, in particular for a setpoint operating state of at least one consumer.

11. An air supply system (1) according to claim 10, the converter (7), in particular the evaluation unit, being designed to identify a faulty operating state of the air supply system (1), in particular of at least one consumer of the air supply system (1), on the basis of the comparison of the measurand received with the setpoint variable assigned to it, if the measurand received deviates from its assigned setpoint variable, in particular if this deviation exceeds a predefined tolerance deviation.

12. An air supply system (1) according to any one of claims 3 to 11, the converter (7) being designed to adapt the operation of the air supply system (1) and/or to initiate maintenance measures on the basis of the measurand received, in particular on the basis of the comparison of the measurand received and the setpoint variable assigned to it, preferably in the event of a faulty operating state of the air supply system (1), in particular of at least one of the group of a plurality of consumers.

13. An air supply system (1) according to any one of the preceding claims, the converter (7) having a communication interface that is designed to be read by a separate readout device and/or to communicate, preferably wirelessly, with a superordinate electronic system.

14. An air supply system (1) according to any one of the preceding claims, the converter (7) being designed to generate an analogue control signal for controlling, in particular for closed-loop controlling, at least one of the group of a plurality of consumers.

15. An air supply system (1) according to any one of the preceding claims, the converter (7) being connected to an additional electrical energy source such as a battery or accumulator by means of which the air supply system (1) can be operated in particular in the event of a failure of the power supply.

16. A method for closed-loop controlling and/or monitoring an air supply system (1) having a group of various electrical consumers such as a compressor, air dryer, valve, etc., the plurality of electrical consumers each performing different functions of the air supply system (1) along a flow of compressed air, and having a converter (7), which is coupled to a power supply of a rail vehicle, for adapting the voltage and/or frequency provided by the power supply to an operating voltage and/or operating frequency of at least one electrical consumer of a rail vehicle, this electrical consumer being operated by such voltage or frequency, in which
- power is provided to the air supply system (1), and
- an operating voltage and/or operating frequency of at least one electrical consumer for operating the electrical consumer is generated from the power supply by means of the converter (7),
**characterised in that** the operation of at least two, preferably all, of the group of a plurality of electrical consumers is controlled, preferably closed-loop controlled, and/or monitored by means of the converter (7).

17. A method according to claim 16, that is designed such that it closed-loop controls and/or monitors an air supply system (1) according to any one of claims 1 to 15.

## Revendications

1. Installation (1) d'alimentation en air d'un véhicule ferroviaire, comprenant
- un groupe de plusieurs consommateurs électriques, comme un compresseur, un déshydrateur d'air, une soupape ou analogue, les plusieurs consommateurs électriques prenant en charge respectivement des fonctions différentes de l'installation d'alimentation en air le long d'un écoulement de l'air comprimé, et
- un convertisseur (7) connecté à l'alimentation en courant du véhicule ferroviaire pour l'adaptation de la tension et/ou de la fréquence donnée par l'alimentation en courant à une tension de fonctionnement et/ou à une fréquence de fonctionnement d'au moins un consommateur électrique, à laquelle le consommateur électrique doit fonctionner,
**caractérisée en ce que** le convertisseur (7) est associé à au moins deux, de préférence à tout le groupe de plusieurs, consommateurs électriques, de manière à ce que le convertisseur (7) puisse commander, en particulier régler et/ou contrôler, le fonctionnement des au moins deux consommateurs du groupe de plusieurs consommateurs électriques.

2. Installation (1) d'alimentation en air suivant la revendication 1, dans laquelle le convertisseur (7) a une électronique (35), qui est agencée pour transformer la tension et/ou la fréquence donnée par l'alimentation en courant en la tension de fonctionnement et/ou la fréquence de fonctionnement du au moins un consommateur électrique, et/ou qui est reliée en transmission du signal au au moins deux consommateurs du groupe de plusieurs consommateurs, de manière à ce que l'électronique (35) puisse commander le fonctionnement, de préférence à l'aide d'algorithmes de commande mises dans l'électronique (35) et/ou le contrôler à l'aide d'algorithmes d'analyse mises dans l'électronique (35) .

3. Installation (1) d'alimentation en air suivant l'une des revendications précédentes, dans laquelle au moins un capteur de détection d'une grandeur de mesure spécifique à l'air, comme la température, la pression, l'humidité de l'air ou analogue, et/ou de détection d'une grandeur de mesure spécifique au consommateur, comme des heures de fonctionnement, la température, l'usure, la puissance d'entrée ou la puissance de sortie, et/ou de détection d'un paramètre de fonctionnement du convertisseur, comme la tension ou la température, est relié en transmission du signal au convertisseur (7), dans laquelle, en particulier, le au moins un capteur est monté et/ou est associé à au moins un convertisseur du groupe de plusieurs convertisseurs, de manière à ce que le capteur puisse détecter la grandeur de mesure spécifique à l'air et/ou la grandeur de mesure spécifique au consommateur.

4. Installation (1) d'alimentation en air suivant la revendication 3, dans laquelle le au moins un capteur est constitué pour mesurer la valeur de pression d'un compresseur et/ou pour mesurer une valeur de pression d'un filtre d'entrée en amont du compresseur et/ou pour mesurer une valeur de pression d'un déshydrateur d'air et/ou pour mesurer une température du déshydrateur d'air ou du compresseur, et/ou pour mesurer un degré de pollution de l'air.

5. Installation (1) d'alimentation en air suivant la revendication 3 ou 4, dans laquelle le convertisseur est constitué pour commander, de préférence pour régler, à l'aide des valeurs de température détectées par le au moins un capteur et/ou d'une prescription de temps et/ou d'une durée de chauffage d'au moins un dispositif de chauffage du déshydrateur d'air, le fonctionnement du dispositif de chauffage et/ou commander, de préférence régler, une valeur de temps et/ou une valeur de température d'un dispositif de purge pour la purge du compresseur et/ou d'un dispositif de marche à vide pour le fonctionnement du compresseur en marche à vide.

6. Installation (1) d'alimentation en air suivant l'une des revendications 3 à 5, dans laquelle le convertisseur a une interface d'entée de réception de la grandeur de mesure et/ou une unité de mémoire pour la mise en mémoire de la grandeur de mesure reçue et/ou de valeurs caractéristiques provenant du traitement des grandeurs de mesure.

7. Installation (1) d'alimentation en air suivant l'une des revendications 3 à 6, dans laquelle le convertisseur est conçu pour, à l'aide de la grandeur de mesure reçue, contrôler un état de fonctionnement de l'installation (1) d'alimentation en air, en particulier d'au moins un consommateur, et pour commander, en particulier à l'aide de la grandeur de mesure reçue, un fonctionnement de l'installation (1) d'alimentation en air.

8. Installation (1) d'alimentation en air suivant l'une des revendications précédentes, dans laquelle le convertisseur (7) est agencé pour commander, en particulier pour régler, le fonctionnement d'un déshydrateur d'air de l'installation (1) d'alimentation en air en fonction de la vitesse de rotation du compresseur et/ou de la température ambiante et/ou de l'humidité résiduelle de l'air, après le déshydrateur d'air, en particulier de manière à commander, de préférence à régler, qu'une perte d'air de régénération du déshydrateur d'air soit rendue minimum.

9. Installation (1) d'alimentation en air suivant l'une des revendications 6 à 8, dans laquelle on met, dans l'unité de mémoire, des grandeurs de consigne d'un état de fonctionnement de consigne de l'installation (1) d'alimentation en air, d'un état de fonctionnement de consignes d'au moins un consommateur, dans laquelle en particulier on associe respectivement une grandeur de mesure à une grandeur de consigne.

10. Installation (1) d'alimentation en air suivant l'une des revendications 3 à 9, dans laquelle le convertisseur (7) a une unité d'analyse pour le traitement de la grandeur de mesure reçue, dans laquelle en particulier l'unité d'analyse est agencée pour comparer la grandeur de mesure reçue à une grandeur de consigne, qui lui est associée, d'un état de fonctionnement de consigne de l'installation (1) d'alimentation en air, en particulier d'un état de fonctionnement de consigne d'au moins un consommateur.

11. Installation (1) d'alimentation en air suivant la revendication 10, dans laquelle le convertisseur (7), en particulier l'unité d'analyse, est constitué pour identifier, à l'aide de la comparaison de la grandeur de mesure reçue à la grandeur de consigne, qui lui est associée, un état de fonctionnement défectueux de l'installation (1) d'alimentation en air, en particulier d'au moins un consommateur de l'installation (1) d'alimentation en air, si la grandeur de mesure reçue s'écarte de cette valeur de consigne, qui lui est associée, en particulier, si un écart dépasse un écart de tolérance défini à l'avance.

12. Installation (1) d'alimentation en air suivant l'une des revendications 3 à 11, dans laquelle le convertisseur (7) est constitué pour, à l'aide de la grandeur de mesure reçue, en particulier à l'aide de la comparaison d'une grandeur de mesure et d'une grandeur de consigne, qui lui est associée, de préférence dans le cas d'un état de fonctionnement défectueux de l'installation (1) d'alimentation en air, en particulier d'au moins du groupe de plusieurs convertisseurs, adapter le fonctionnement de l'installation (1) d'alimentation en air, et/ou lancer des mesures d'entretien.

13. Installation (1) d'alimentation en air suivant l'une des revendications précédentes, dans laquelle le convertisseur (7) a une interface de communication, qui est constituée pour être lue par un dispositif de lecture distinct, et/ou pour communiquer, de préférence sans câble avec une électronique supérieure hiérarchiquement.

14. Installation (1) d'alimentation en air suivant l'une des revendications précédentes, dans laquelle le convertisseur (7) est constitué pour produire un signal de commande analogique pour la commande, en particulier le réglage, d'au moins l'un du groupe de plusieurs consommateurs.

15. Installation (1) d'alimentation en air suivant l'une des revendications précédentes, dans laquelle le convertisseur (7) est raccordé à une source d'énergie électrique supplémentaire comme une batterie ou un accumulateur, au moyen de laquelle l'installation (7) d'alimentation en air peut fonctionner, en particulier dans le cas d'une défaillance de l'alimentation en courant.

16. Procédé de réglage et/ou de contrôle d'une installation (1) d'alimentation en air ayant un groupe de consommateurs électriques, , comme un compresseur, un déshydrateur d'air, une soupape ou analogue, les plusieurs consommateurs électriques prenant en charge respectivement des fonctions différentes de l'installation d'alimentation en air le long d'un écoulement de l'air comprimé, et un convertisseur (7) connecté à l'alimentation en courant du véhicule ferroviaire pour l'adaptation de la tension et/ou de la fréquence donnée par l'alimentation en courant à une tension de fonctionnement et/ou à une fréquence de fonctionnement d'au moins un consommateur électrique, à laquelle le consommateur électrique doit fonctionner, d'un véhicule ferroviaire, dans lequel
- on met du courant à disposition de l'installation (1) d'alimentation en air, et
- on produit une tension de fonctionnement et/ou une fréquence de fonctionnement d'au moins un consommateur électrique pour le fonctionnement du consommateur électrique, à partir de l'alimentation en courant au moyen du convertisseur (7),
**caractérisé en ce que** l'on commande, de préférence on règle et/ou on contrôle le fonctionnement d'au moins deux consommateurs, de préférence de l'ensemble des consommateurs du groupe de plusieurs consommateurs électrique au moyen du convertisseur (7).

17. Procédé suivant la revendication 16, **caractérisé en ce qu'**il est constitué de manière à régler et/ou à contrôler l'installation (1) d'alimentation en air suivant l'une des revendications 1 à 15.
